# EUROPÄISCHE PATENTSCHRIFT

(11) **EP 3 878 679 B1**
(45) Veröffentlichungstag und Bekanntmachung des Hinweises auf die Patenterteilung: **04.09.2024**
(21) Anmeldenummer: 21166979.1
(22) Anmeldetag: 25.02.2016
(51) Int. Cl.: B60K 37/00

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR DE VÉHICULE AUTOMOBILE, EN PARTICULIER D'UN VÉHICULE UTILITAIRE

(30) Priorität: 12.03.2015 DE 102015003181
(43) Veröffentlichungstag der Anmeldung: 15.09.2021
(62) Teilanmeldung aus: 16000450.3
(73) Patentinhaber: MAN Truck & Bus SE, 80995 München (DE)
(72) Erfinder: Arnold, Claus, 93161 Sinzing (DE); Mohra, Holger, 80805 München (DE)
(74) Vertreter: Liebl, Thomas

(56) Entgegenhaltungen:
- DE-A1- 102008 028 434
- DE-A1- 102013 021 594

## Beschreibung

Die Erfindung betrifft ein Verfahren zur Unterstützung eines Fahrers eines Fahrzeugs, insbesondere eines Nutzfahrzeugs, nach dem Oberbegriff des Patentanspruches 1, eine Vorrichtung zur Unterstützung eines Fahrers eines Fahrzeugs, insbesondere eines Nutzfahrzeugs, nach dem Oberbegriff des Patentanspruches 14.

Es ist bekannt, ein mobiles Gerät, beispielsweise ein Smartphone, derart mit einem Fahrzeug, insbesondere mit einem Nutzfahrzeug, zu koppeln, dass auf einem Bildschirm des mobilen Geräts Fahrzeuginformationen angezeigt werden. Auf diese Weise kann ein Fahrer des Fahrzeugs beispielsweise über den aktuellen Zustand des Fahrzeugs informiert werden, wenn er sich außerhalb des Fahrzeugs befindet. Derartige Fahrzeuginformationen können beispielsweise ein aktueller Standort des Fahrzeugs oder Informationen über den Zustand von Fahrzeugreifen oder der Fahrzeugbeleuchtung sein. Ebenso ist es auch bekannt, dass mittels des mobilen Geräts Fahrzeugfunktionen fernbedient bzw. ferngesteuert werden können. Hierzu wird üblicherweise ein Bedienmenü zur Fernbedienung der Fahrzeugfunktionen an dem mobilen Gerät angezeigt, mittels dem der Fahrer die Fahrzeugfunktionen von außerhalb des Fahrzeugs bedienen bzw. steuern kann. Derartige Fahrzeugfunktionen können beispielsweise eine Steuerung einer Fahrzeugklimaanlage oder eine Steuerung einer Fahrzeugbeleuchtung sein. Zur Anzeige der Fahrzeuginformationen und/oder zur Fernbedienung der Fahrzeugfunktionen werden dabei üblicherweise mobile Apps bzw. eine mobile Anwendungssoftware bereitgestellt, die bei Bedarf an dem mobilen Gerät installiert werden kann.

Da an einem mobilen Gerät häufig eine große Anzahl von Apps, anzeigbaren Fahrzeuginformationen und fernbedienbaren Fahrzeugfunktionen vorgesehen ist, ist es für einen Fahrer des Fahrzeugs regelmäßig schwierig, die für ihn aktuell bzw. situativ relevante Fahrzeuginformation und/oder das richtige Bedienmenü zur Fernbedienung einer definierten Fahrzeugfunktion rasch zu finden. Regelmäßig bleibt die Suche nach der gewünschten Information bzw. Funktion sogar erfolglos.

Aus der DE 10 2013 021594 A1 ist eine Steuerung eines mobilen Gerätes für Kraftfahrzeuganwendungen bekannt. Die DE 10 2008 028434 A1 offenbart eine Ladebordwand mit Fernbedienung.

Es ist daher Aufgabe der Erfindung, ein Verfahren und eine Vorrichtung zur Unterstützung eines Fahrers eines Fahrzeugs, insbesondere eines Nutzfahrzeugs, bereitzustellen, mittels denen die Suche nach definierten Fahrzeuginformationen und/oder definierter Bedienmenüs zur Fernbedienung von Fahrzeugfunktionen für den Fahrer vereinfacht wird.

Diese Aufgabe wird gelöst durch die Merkmale der unabhängigen Patentansprüche. Bevorzugte Weiterbildungen sind in den Unteransprüchen offenbart.

Gemäß Patentanspruch 1 wird ein Verfahren zur Unterstützung eines Fahrers eines Fahrzeugs, insbesondere eines Nutzfahrzeugs, vorgeschlagen, wobei eine mobile Anzeigeeinrichtung, insbesondere ein Bildschirm, vorgesehen ist, mittels der dem Fahrer wenigstens eine Fahrzeuginformation und/oder wenigstens ein Bedienmenü zur Fernbedienung wenigstens einer Fahrzeugfunktion angezeigt werden kann. Erfindungsgemäß ist die Anzeigeeinrichtung signalübertragend mit einer Positionsermittlungseinrichtung verbunden, mittels der die Position der Anzeigeeinrichtung relativ zu dem Fahrzeug ermittelt werden kann. In Abhängigkeit von der ermittelten Position wird dann mittels der Anzeigeeinrichtung wenigstens eine Fahrzeuginformation und/oder wenigstens ein Bedienmenü zur Fernbedienung wenigstens einer Fahrzeugfunktion angezeigt.

Auf diese Weise wird die Suche nach definierten Fahrzeuginformationen und/oder Bedienmenüs deutlich vereinfacht, da nun in Abhängigkeit von der ermittelten Position der mobilen Anzeigeeinrichtung und somit auch der Position des Nutzers der mobilen Anzeigeeinrichtung, beispielsweise des Fahrers des Fahrzeugs, die aktuell für den Fahrer relevanten Fahrzeuginformationen und/oder Bedienmenüs mittels der Anzeigeeinrichtung angezeigt werden. Die Anzeige kann dabei beispielsweise mittels sogenannter Pop-ups oder durch optisches Hervorheben der relevanten Fahrzeuginformationen und/oder der Bedienmenüs erfolgen. Die nicht relevanten Fahrzeuginformationen und/oder Bedienmenüs werden dann nicht mittels der Anzeigeeinrichtung angezeigt oder nicht hervorgehoben. Somit muss der Fahrer lediglich die bereits bezüglich seiner aktuellen Position vorgefilterten Fahrzeuginformationen und/oder Bedienmenüs durchsuchen, um zu den gewünschten Fahrzeuginformationen und/oder Bedienmenüs zu kommen.

Die Begrifflichkeit mobile Anzeigeeinrichtung ist hier dabei derart zu verstehen, dass die Anzeigeeinrichtung von dem Fahrer mitgeführt bzw. mittransportiert werden kann. Bevorzugt ist es dabei, wenn die mobile Anzeigeeinrichtung derart kompakt ausgebildet ist, dass der Fahrer sie an seiner Kleidung anbringen bzw. festlegen kann.

In einer bevorzugten Verfahrensführung wird mittels der Positionsermittlungseinrichtung die Entfernung der Anzeigeeinrichtung relativ zu dem Fahrzeug ermittelt. In Abhängigkeit von der ermittelten Entfernung der Anzeigeeinrichtung wird dann wenigstens eine Fahrzeuginformation und/oder wenigstens ein Bedienmenü zur Fernbedienung wenigstens einer Fahrzeugfunktion mittels der Anzeigeeinrichtung angezeigt. Die Entfernung der Anzeigeeinrichtung relativ zu dem Fahrzeug kann besonders einfach und mit hoher Genauigkeit mittels der Positionsermittlungseinrichtung ermittelt werden.

Konkret kann die Positionsermittlungseinrichtung wenigstens eine dem Fahrzeug zugeordnete Sendeeinrichtung aufweisen, mittels der ein Positionssignal ausgegeben werden kann. Die Positionsermittlungseinrichtung weist dann auch eine der Anzeigeeinrichtung zugeordnete Empfangseinrichtung auf, mittels der das wenigstens eine Positionssignal empfangen werden kann. Zudem weist die Positionsermittlungseinrichtung dann auch eine der Anzeigeeinrichtung zugeordnete Datenverarbeitungseinrichtung auf, mittels der aus dem wenigstens einen empfangenen Positionssignal die Position der Anzeigeeinrichtung relativ zu dem Fahrzeug ermittelt wird. Auf diese Weise kann die Position der Anzeigeeinrichtung relativ zu dem Fahrzeug einfach und zuverlässig ermittelt werden.

Das Positionssignal kann dabei beispielsweise durch ein Funksignal oder durch ein WLAN-Signal und/oder durch ein GPS-Signal gebildet sein. Bevorzugt ist es jedoch, wenn das Positions-Signal durch ein Bluetooth-Signal gebildet ist, da mittels diesem die Position der Anzeigeeinrichtung mit besonders hoher Genauigkeit ermittelt werden kann. Zudem ist die Bluetooth-Technologie auch besonders energiesparend, so dass diese für eine Positionsermittlung mit einem mobilen Gerät besonders vorteilhaft ist. Im Folgenden wird nochmals auf die Vorteile moderner Bluetooth-Technologien eingegangen:
Seit der Bluetooth Version 4.0 ist "Bluetooth Low Energy" bzw. "Bluetooth Smart" ein Teil des Bluetooth-Standards. Es ermöglicht eine Basiskommunikation zwischen Bluetooth-Geräten ohne einen vorherigen Kopplungsvorgang. Diese Basiskommunikation ist besonders energiesparend und kann zur Entfernungsbestimmung zwischen Bluetooth-Smart-fähigen Geräten verwendet werden. Die Entfernung eines mobilen Bluetooth-Smart-fähigen Geräts, beispielsweise eines Smartphones als Anzeigeeinrichtung, zu einem anderen definierten Objekt, beispielsweise dem Fahrzeug, kann dabei mittels sogenannter "Bluetooth-Beacons" erfolgen, die dem definierten Objekt zugeordnet sind. Das Bluetooth-Smart-fähige Gerät ist in der Lage, nach diesen Bluetooth-Beacons zu suchen und über die Signalstärke eines Beacon-Signals einen Abstand zwischen dem Bluetooth-Smart-fähigen Gerät und dem Beacon auf wenige Zentimeter genau in einem Bereich von ca. 5cm bis zu 70m um das Beacon herum zu bestimmen. Werden mindestens drei Beacons mit überschneidendem Senderadius eingesetzt, kann über Triangulation die Position des Bluetooth-Smart-fähigen Geräts relativ zu den Beacons mit hoher Genauigkeit bestimmt werden.

In einer bevorzugten Ausgestaltung weist die Anzeigeeinrichtung weiter wenigstens eine durch den Fahrer des Fahrzeugs betätigbare, mobile Betätigungseinrichtung, insbesondere einen Taster und/oder einen Schalter, auf, durch deren Betätigung das wenigstens eine Bedienmenü bedient werden kann. So kann das wenigstens eine Bedienmenü einfach und funktionssicher bedient werden. Bevorzugt ist die wenigstens eine Betätigungseinrichtung dabei durch die einen Touchscreen aufweisende Anzeigeeinrichtung gebildet.

Konkret kann die Anzeigeeinrichtung durch ein mobiles Gerät, insbesondere durch ein Smartphone und/oder durch einen Tablet-PC, gebildet sein. Durch die Bildung der Anzeigeeinrichtung durch ein derartiges herkömmliches mobiles Gerät kann die Fernbedienung der wenigstens einen Fahrzeugfunktion auf besonders kostengünstige Weise realisiert werden.

Bevorzugt ist eine Signalübertragungseinrichtung vorgesehen, mittels der wenigstens ein, insbesondere als WLAN-Signal und/oder als Funksignal und/oder als Bluetooth-Signal ausgebildetes, Fernbedienungssignal von der Anzeigeeinrichtung an das Fahrzeug und/oder wenigstens ein, insbesondere als WLAN-Signal und/oder als Funksignal und/oder als Bluetooth-Signal ausgebildetes, Fahrzeuginformationssignal von dem Fahrzeug an die Anzeigeeinrichtung übertragen wird. Das WLAN-Signal oder das Funksignal sind dabei besonders vorteilhaft, da diese eine besonders hohe Reichweite aufweisen. Das Bluetooth-Signal eignet sich vor allem dann zur Signalübertragung, wenn sich die Anzeigeeinrichtung in einem definierten Nahbereich im Bereich des Fahrzeugs befindet.

Bevorzugt wird, sofern sich die Empfangseinrichtung außerhalb der Reichweite des Positionssignals befindet und sie somit das Positionssignal nicht empfängt, wenigstens eine Fern-Fahrzeuginformation und/oder wenigstens ein Bedienmenü zur Fernbedienung wenigstens einer Fern-Fahrzeugfunktion mittels der Anzeigeeinrichtung angezeigt. Auf diese Weise werden außerhalb der Reichweite des Positionssignals lediglich die hier relevanten Fahrzeuginformationen und/oder Bedienmenüs mittels der Anzeigeeinrichtung angezeigt.

Vorzugsweise ist die Fern-Fahrzeuginformation durch wenigstens eine allgemeine Fahrzeuginformation und/oder durch den aktuellen Luftdruck wenigstens eines Fahrzeugreifens und/oder durch den aktuellen Standort des Fahrzeugs und/oder durch wenigstens eine Instrumententafelinformation gebildet. Diese Fahrzeuginformationen sind besonders interessant, wenn sich die Anzeigeeinrichtung außerhalb der Reichweite des Positionssignals befindet. Die wenigstens eine allgemeine Fahrzeuginformation kann dabei beispielsweise durch den aktuellen Füllstand einer Fahrzeugflüssigkeit, beispielsweise Kraftstoff, AdBlue, Wischwasser, Motorkühlflüssigkeit oder Motoröl, und/oder durch einen Fehlerspeichereintrag, beispielsweise aufgrund eines defekten Sensors, eines verschmutzten Luftfilters, einer defekten Glühbirne oder einer fälligen Inspektion, und/oder durch den aktuellen Bremsbelagzustand und/oder durch den aktuellen Kilometerstand gebildet sein. Zudem kann die wenigstens eine allgemeine Fahrzeuginformation beispielsweise auch durch im Fahrzeug gespeicherte Tourdaten, wie beispielsweise gefahrene Kilometer der letzten Tour, Durchschnittsverbrauch, Verbrauchsstatistik, zeitliche Dauer der letzten Tour, und/oder durch im Fahrzeug gespeicherte Daten eines digitalen Tachographen, wie beispielsweise Restlenkzeit, erforderliche Pausenzeit, erforderliche Ruhezeit, und/oder durch Informationen über den Fahrzeugaufbau, wie beispielsweise Innentemperatur des Kühlkofferaufbaus gebildet sein.

Weiter bevorzugt ist die wenigstens eine fernbedienbare Fern-Fahrzeugfunktion durch eine Regelung und/oder Steuerung einer Fahrzeugheizung und/oder einer Fahrzeugklimaanlage gebildet. Diese Regelung und/oder Steuerung ist ebenfalls relevant, wenn sich die Anzeigeeinrichtung außerhalb der Reichweite des Positionssignals befindet. Des Weiteren kann die wenigstens eine fernbedienbare Fern-Fahrzeugfunktion beispielsweise auch durch eine Regelung und/oder Steuerung wenigstens einer am Fahrzeug installierten Außenkamera zur Überwachung des Fahrzeugumfelds und/oder durch eine Regelung und/oder Steuerung wenigstens einer aufbauspezifischen Funktion, beispielsweise die Regelung und/oder Steuerung der Innentemperatur eines Kühlkofferaufbaus, gebildet sein.

Weiter bevorzugt wird, sofern sich die Empfangseinrichtung innerhalb der Reichweite des Positionssignals befindet und sie somit das Positionssignal empfängt, wenigstens eine Nah-Fahrzeuginformation und/oder wenigstens ein Bedienmenü zur Fernbedienung wenigstens einer Nah-Fahrzeugfunktion mittels der Anzeigeeinrichtung angezeigt. Bevorzugt ist dabei vorgesehen, dass die wenigstens eine Nah-Fahrzeuginformation durch wenigstens eine allgemeine Fahrzeuginformation gebildet ist.

Bevorzugt wird, sofern sich die Empfangseinrichtung von einem Außenbereich außerhalb der Reichweite des Positionssignals in einen Innenbereich innerhalb der Reichweite des Positionssignals bewegt, wenigstens eine Nah-Fahrzeuginformation und/oder wenigstens ein Bedienmenü zur Fernbedienung wenigstens einer Nah-Fahrzeugfunktion mittels der Anzeigeeinrichtung angezeigt. Auf diese Weise werden die wenigstens eine Nah-Fahrzeuginformation und/oder das wenigstens eine Bedienmenü zur Fernbedienung wenigstens einer Nah-Fahrzeugfunktion besonders früh angezeigt. Bevorzugt ist dabei vorgesehen, dass beim Anzeigen wenigstens einer definierten Nah-Fahrzeuginformation und/oder wenigstens eines definierten Bedienmenüs zur Fernbedienung wenigstens einer Nah-Fahrzeugfunktion mittels einer der Anzeigeeinrichtung zugeordneten Signalausgabeeinrichtung ein, insbesondere akustisches, Informationssignal an den Fahrer ausgegeben wird. Mittels eines derartigen Informationssignals kann der Fahrer zuverlässig darauf hingewiesen werden, dass nun relevante Nah-Fahrzeuginformationen und/oder relevante Bedienmenüs mittels der Anzeigeeinrichtung angezeigt werden bzw. zur Verfügung stehen. Auf diese Weise kann der Fahrer beispielsweise an die Durchführung einer Abfahrtskontrolle als relevante Nah-Fahrzeuginformation erinnert werden.

Vorzugsweise ist, sofern sich die Empfangseinrichtung außerhalb des Fahrzeugs befindet, die Nah-Fahrzeugfunktion durch eine Außen-Fahrzeugfunktion gebildet, wobei bevorzugt vorgesehen ist, dass die wenigstens eine fernbedienbare Außen-Fahrzeugfunktion durch eine Steuerung und/oder Regelung einer Fahrzeug-Außenbeleuchtung und/oder eine Überprüfung der Fahrzeug-Beleuchtung und/oder durch eine Verriegelung und/oder Entriegelung des Fahrzeugs gebildet ist.

Sofern sich die Empfangseinrichtung innerhalb des Fahrzeugs befindet, ist die Nah-Fahrzeugfunktion vorzugsweise durch eine Innen-Fahrzeugfunktion gebildet, wobei bevorzugt vorgesehen ist, dass die wenigstens eine fernbedienbare Innen-Fahrzeugfunktion durch eine Steuerung und/oder Regelung eines Infotainment-Systems des Fahrzeugs und/oder durch eine Steuerung und/oder Regelung einer Fahrzeugheizung und/oder einer Fahrzeugklimaanlage und/oder durch eine Steuerung und/oder Regelung einer Fahrzeug-Innenbeleuchtung und/oder durch eine Verriegelung und/oder Entriegelung des Fahrzeugs gebildet ist. Weiter kann die wenigstens eine fernbedienbare Innen-Fahrzeugfunktion beispielsweise auch durch eine Steuerung und/oder Regelung eines Fahrzeug-Schiebedachs und/oder wenigstens eines Fahrzeugfensters und/oder wenigstens eines Fahrzeug-Sonnenrollos und/oder einer Niveauausgleichs-Einrichtung des Fahrzeugs gebildet sein.

Weiter bevorzugt ist eine Blockiereinrichtung vorgesehen, mittels der in Abhängigkeit von der ermittelten Position der Anzeigeeinrichtung die Fernbedienung wenigstens einer Fahrzeugfunktion blockiert werden kann. Auf diese Weise können in Abhängigkeit von der ermittelten Position der Anzeigeeinrichtung nur diejenigen Fahrzeugfunktionen fernbedient bzw. ferngesteuert werden, bei denen eine Fernbedienung aktuell sinnvoll bzw. ungefährlich ist. Bevorzugt ist dabei vorgesehen, dass, sofern sich die Anzeigeeinrichtung in einer Sitzposition in einem definierten Nahbereich im Bereich des Fahrersitzes befindet, die Fernbedienung wenigstens einer, insbesondere die Fernbedienung von allen, Fahrzeugfunktion(en) mittels der Blockiereinrichtung blockiert wird. Dadurch kann beispielsweise eine Ablenkung des Fahrers durch die Fernbedienung verhindert werden, wenn sich der Fahrer auf dem Fahrersitz befindet. Bevorzugt ist dabei vorgesehen, dass, sofern sich die Anzeigeeinrichtung in der Sitzposition befindet und sich das Fahrzeug bewegt, die Fernbedienung der wenigstens einen Fahrzeugfunktion mittels der Blockiereinrichtung blockiert wird. Auf diese Weise wird sichergestellt, dass die Fernbedienung der wenigstens einen Fahrzeugfunktion nur bei einer Fahrt mit dem Fahrzeug blockiert wird. Weiter bevorzugt ist, sofern die wenigstens eine Fahrzeugfunktion mittels der Blockiereinrichtung blockiert ist, die Signalübertragung zwischen Fahrzeug und Anzeigeeinrichtung zumindest teilweise weiterhin aktiviert. Dadurch können beispielsweise in der Anzeigeeinrichtung gespeicherte Daten, beispielsweise Musikdaten oder Telefonkontaktdaten, weiterhin an das Fahrzeug übermittelt werden.

Erfindungsgemäß ist vorgesehen, dass, sofern sich die Anzeigeeinrichtung bei einem Be- und/oder Entladevorgang des Fahrzeugs in wenigstens einer definierten Position relativ zu dem Fahrzeug befindet, wenigstens eine Be- und/oder Endlade-Fahrzeuginformation und/oder wenigstens ein Bedienmenü zur Fernbedienung einer Be- und/oder Endlade-Fahrzeugfunktion mittels der Anzeigeeinrichtung angezeigt wird. Auf diese Weise kann der Fahrer die wenigstens eine Be- und/oder Entlade-Fahrzeuginformation oder das wenigstens eine Bedienmenü zur Fernbedienung einer Be- und/oder Endlade-Fahrzeugfunktion besonders schnell auffinden, wenn er diese Information oder dieses Bedienmenü benötigt. Die Information, dass sich das Fahrzeug in einem Be- und/oder Entladevorgang befindet, kann dabei beispielsweise mittels einer externen Informationseinrichtung an die Anzeigeeinrichtung übermittelt werden. Ebenso wäre es beispielsweise aber auch denkbar, dass der Fahrer der Anzeigeeinrichtung einen Be- und/oder Entladevorgang des Fahrzeugs mitteilt.

Die wenigstens eine Be- und/oder Entlade-Fahrzeuginformation kann dabei beispielsweise durch wenigstens eine definierte Wartungs- und/oder Logistik- und/oder Ladungsinformation, beispielsweise durch die zu verwendende Ladungssicherung oder durch einen Gefahrguthinweis, gebildet sein. Die fernbedienbare Be- und/oder Endlade-Fahrzeugfunktion kann dabei beispielsweise durch eine Steuerung und/oder Regelung eines Tankaufbaus, einer Be- und/oder Entladevorrichtung des Fahrzeugs, einer Ladebordwand des Fahrzeugs, einer Luftfederung des Fahrzeugs oder einer Antriebseinrichtung des Fahrzeugs zum Antreiben eines Kompressors/Nebenaggregats gebildet sein.

Zur Lösung der bereits genannten Aufgabe wird ferner eine Vorrichtung zur Unterstützung eines Fahrers eines Fahrzeugs, insbesondere eines Nutzfahrzeugs, vorgeschlagen, wobei eine mobile Anzeigeeinrichtung, insbesondere ein Bildschirm vorgesehen ist, mittels der dem Fahrer wenigstens eine Fahrzeuginformation und/oder wenigstens ein Bedienmenü zur Fernbedienung wenigstens einer Fahrzeugfunktion angezeigt werden kann. Erfindungsgemäß ist die Anzeigeeinrichtung signalübertragend mit einer Positionsermittlungseinrichtung verbunden, mittels der die Position der Anzeigeeinrichtung relativ zu dem Fahrzeug ermittelt werden kann. In Abhängigkeit von der ermittelten Position kann dann wenigstens eine Fahrzeuginformation und/oder wenigstens ein Bedienmenü zur Fernbedienung wenigstens einer Fahrzeugfunktion mittels der Anzeigeeinrichtung angezeigt werden oder nicht.

Die sich durch die erfindungsgemäße Vorrichtung ergebenden Vorteile sind identisch mit den bereits gewürdigten Vorteilen des erfindungsgemäßen Verfahrens, so dass diese an dieser Stelle nicht wiederholt werden.

Des Weiteren wird auch ein Fahrzeug, insbesondere ein Nutzfahrzeug, zur Durchführung des erfindungsgemäßen Verfahrens und/oder mit der erfindungsgemäßen Vorrichtung beansprucht. Die sich hieraus ergebenden Vorteile sind identisch mit den Vorteilen des erfindungsgemäßen Verfahrens und der erfindungsgemäßen Vorrichtung, so dass auch diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung ein mobiles Gerät in einer ersten Position relativ zu einem Lastkraftwagen;
- Fig. 2: ein Diagramm, anhand dem der Aufbau der erfindungsgemäßen Vorrichtung erläutert wird;
- Fig. 3: in einer Darstellung gemäß Fig. 1 das mobile Gerät in einer zweiten Position relativ zu dem Lastkraftwagen;
- Fig. 4: in einer Darstellung gemäß Fig. 1 das mobile Gerät in einer dritten Position relativ zu dem Lastkraftwagen;
- Fig. 5: in einer Darstellung gemäß Fig. 1 das mobile Gerät in einer vierten Position relativ zu dem Lastkraftwagen; und
- Fig. 6: in einer Darstellung gemäß Fig. 1 das mobile Gerät in einer fünften Position relativ zu dem Lastkraftwagen.

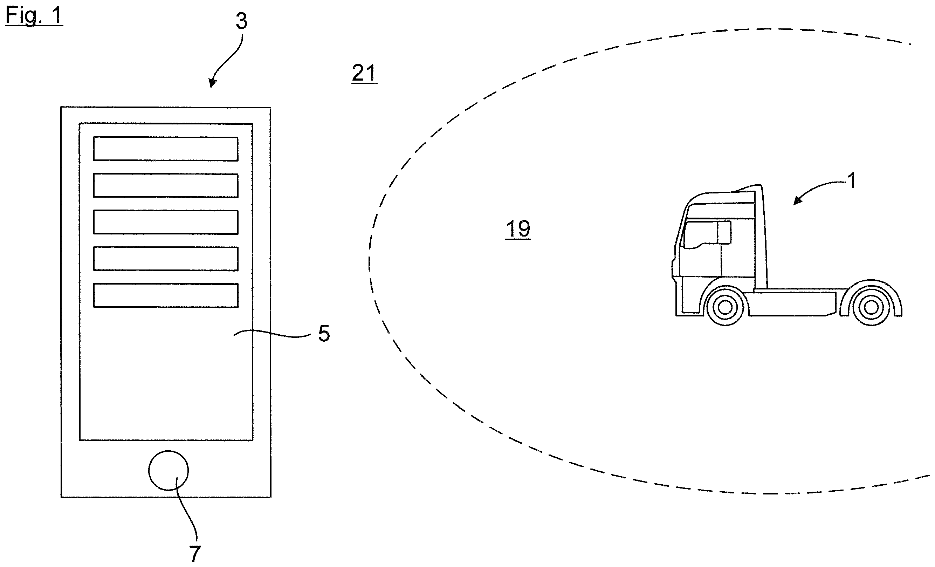

In Fig. 1 sind ein hier beispielhaft als Lastkraftwagen 1 ausgebildetes Fahrzeug und ein mobiles Gerät 3 gezeigt. Das mobile Gerät 3 weist eine hier beispielhaft als Bildschirm 5 ausgebildete Anzeigeeinrichtung auf, mittels der einem Fahrer des Lastkraftwagens 1 hier beispielhaft sowohl mehrere Fahrzeuginformationen als auch mehrere Bedienmenüs zur Fernbedienung von Fahrzeugfunktionen angezeigt werden können. Die Bedienmenüs können hier beispielhaft über den als Touchscreen ausgebildeten Bildschirm 5 und über eine Taste 7 bedient werden. Ebenso wäre es beispielsweise aber auch denkbar, andere Arten von Betätigungseinrichtungen zur Bedienung der Bedienmenüs an dem mobilen Gerät 3 vorzusehen.

Das mobile Gerät 3 ist hier beispielhaft als herkömmliches Smartphone ausgebildet, an dem eine mobile App bzw. eine Anwendungssoftware vorgesehen ist, mittels der die Fahrzeuginformationen angezeigt und die Fahrzeugfunktionen fernbedient werden können. Alternativ zu einem herkömmlichen Smartphone könnte das mobile Gerät 3 beispielsweise aber auch als herkömmlicher Tablet-PC oder als anderes, durch den Fahrer des Lastkraftwagens 1 mitführbares Gerät ausgebildet sein. Insbesondere könnte das mobile Gerät 3 beispielsweise auch als speziell für den Fahrer des Lastkraftwagens 1 entwickelte Fahrzeug-Fernbedienung und/oder Fahrzeug-Informationseinrichtung ausgebildet sein.

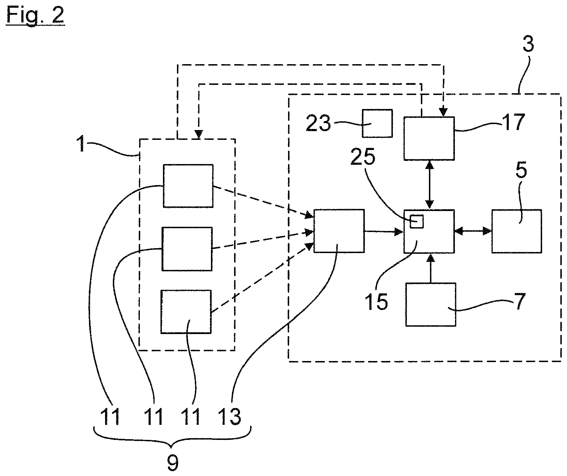

Um den Fahrer des Lastkraftwagens 1 die Bedienung der mobilen App bzw. der Anwendungssoftware zu erleichtern, ist eine Positionsermittlungseinrichtung 9 (Fig. 2) vorgesehen, mittels der die Position des mobilen Geräts 3 relativ zu dem Lastkraftwagen 1 ermittelt werden kann. In Abhängigkeit von der ermittelten Position wird mittels des Bildschirms 5 des mobilen Geräts 3 dann wenigstens eine Fahrzeuginformation und/oder wenigstens ein Bedienmenü zur Fernbedienung wenigstens einer Fahrzeugfunktion angezeigt oder nicht. Auf diese Weise können dem Fahrer des Lastkraftwagens 1 in Abhängigkeit von seiner aktuellen Position besonders relevante Fahrzeuginformationen und Bedienmenüs angezeigt werden, wenn er die mobile App bzw. die Anwendungssoftware aktiviert hat. Aufgrund der Vielzahl von Fahrzeuginformationen und Bedienmenüs erleichtert dies die Suche nach der gewünschten Fahrzeuginformation und/oder nach dem gewünschten Bedienmenü deutlich.

Wie in Fig. 2 gezeigt ist, weist die Positionsermittlungseinrichtung 9 hier beispielhaft drei dem Lastkraftwagen 1 zugeordnete Sendeeinrichtungen 11 auf, mittels denen Positionssignale ausgegeben werden können. Die Sendeeinrichtungen 11 sind hier beispielhaft als sogenannte Bluetooth-Beacons ausgebildet, mittels denen ein als Bluetooth-Signal ausgebildetes Positionssignal ausgegeben wird. Gemäß Fig. 2 weist die Positionsermittlungseinrichtung 9 weiter auch eine dem mobilen Gerät 3 zugeordnete Empfangseinrichtung 13 auf, mittels der die Positionssignale empfangen werden. Zudem weist die Positionsermittlungseinrichtung 9 auch eine dem mobilen Gerät 3 zugeordnete Datenverarbeitungseinrichtung 15 auf, mittels der aus den empfangenen Positionssignalen die Position des mobilen Geräts 3 relativ zu dem Lastkraftwagen 1 ermittelt werden kann.

Die Datenverarbeitungseinrichtung 15 ist hier beispielhaft auch derart signaltechnisch mit dem Bildschirm 5 des mobilen Geräts 3 verbunden, dass mittels der Datenverarbeitungseinrichtung 15 die Anzeige des Bildschirms 5 gesteuert bzw. geregelt werden kann. Die Datenverarbeitungseinrichtung 15 bildet hier somit auch eine Regel- und/oder Steuereinrichtung aus. Zudem sind der Bildschirm 5 und die Taste 7 des mobilen Geräts 3 hier beispielhaft derart signaltechnisch mit der Datenverarbeitungseinrichtung 15 verbunden, dass Betätigungen des als Touchscreen ausgebildeten Bildschirms 5 und der Taste 7 an die Datenverarbeitungseinrichtung 15 übermittelt werden.

Des Weiteren ist die Datenverarbeitungseinrichtung 15 hier beispielhaft auch signaltechnisch mit einer dem mobilen Gerät 3 zugeordneten Sende- und Empfangseinrichtung 17 verbunden. Mittels der Sende- und Empfangseinrichtung 17 werden die mittels des mobilen Geräts 3 anzeigbaren Fahrzeuginformationen von dem Lastkraftwagen 1 an das mobile Gerät 3 übermittelt. Zudem werden mittels der Sende- und Empfangseinrichtung 17 auch Befehle zur Fernbedienung von Fahrzeugfunktionen von dem mobilen Gerät 3 an den Lastkraftwagen 1 übermittelt.

Im Folgenden wird nun erläutert, welche Fahrzeuginformationen und Bedienmenüs in Abhängigkeit von der ermittelten Position des mobilen Geräts 3 an dem Bildschirm 5 des mobilen Geräts 3 angezeigt werden:
Sofern sich das mobile Gerät 3, wie in Fig. 1 gezeigt ist, außerhalb der Reichweite der hier mehreren Positionssignale bzw. außerhalb eines Empfangsbereichs 19 befindet, und sie somit die Positionssignale nicht empfängt, werden hier beispielhaft allgemeine Fahrzeuginformationen, die aktuellen Luftdrücke von Fahrzeugreifen des Lastkraftwagens 1, der aktuelle Standort des Lastkraftwagens 1 und Instrumententafelinformationen des Lastkraftwagens 1 mittels des mobilen Geräts 3 angezeigt. Zudem wird dann auch ein Bedienmenü zur Regelung bzw. Steuerung einer Fahrzeugheizung bzw. einer Fahrzeugklimaanlage an dem Bildschirm 5 angezeigt.

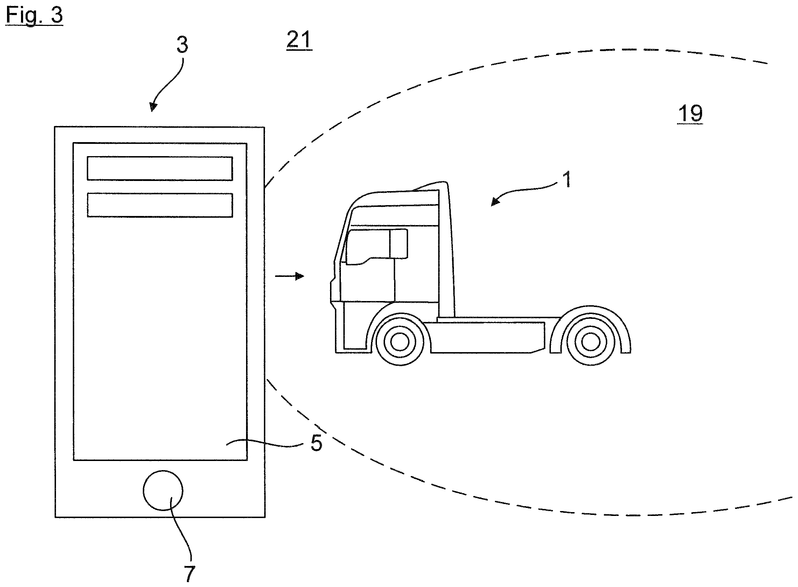

Sofern sich das mobile Gerät 3, wie in Fig. 3 gezeigt ist, von einem Außenbereich 21 außerhalb der Reichweite der Positionssignale in den Empfangsbereich 19 innerhalb der Reichweite der Positionssignale bewegt, wird mittels des Bildschirms 5 hier beispielhaft ein Bedienmenü zur Überprüfung der Fahrzeugbeleuchtung angezeigt. Gleichzeitig wird hier mittels einer Signalausgabeeinrichtung 23 des mobilen Geräts 3 auch ein akustisches Informationssignal ausgegeben, mittels dem der Fahrer des Lastkraftwagens 1 auf die Anzeige dieses Bedienmenüs zur Überprüfung der Fahrzeugbeleuchtung hingewiesen wird.

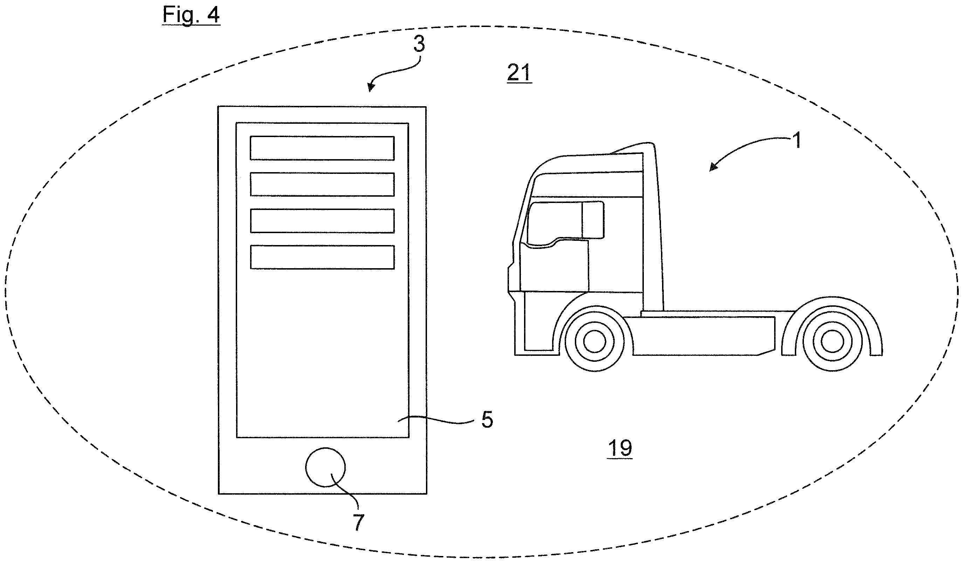

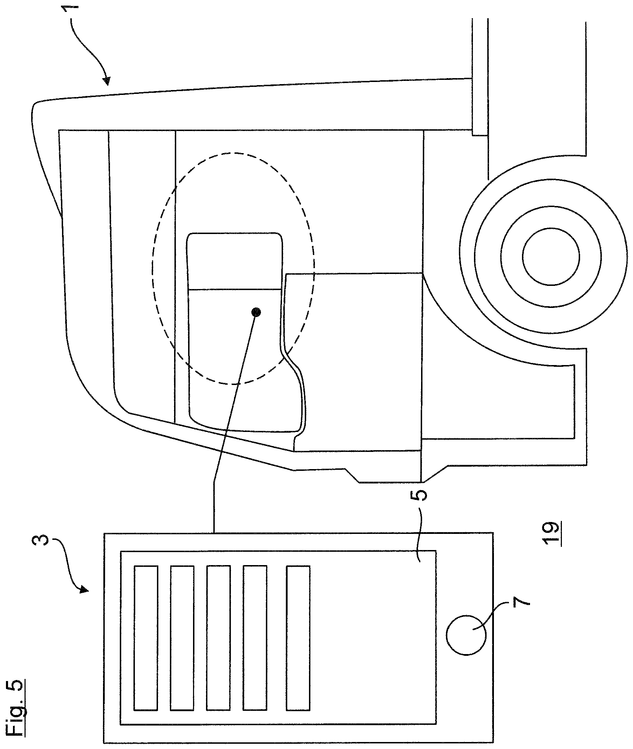

Weiter werden, sofern sich das mobile Gerät gemäß Fig. 4 innerhalb der Reichweite der Positionssignale bzw. in dem Empfangsbereich 19 befindet, allgemeine Fahrzeuginformationen mittels des Bildschirms 5 des mobilen Geräts 3 angezeigt. Sofern sich das mobile Gerät 3 dabei gemäß Fig. 4 außerhalb des Fahrzeugs befindet, wird mittels des Bildschirms 5 des mobilen Geräts 3 hier beispielhaft auf ein Bedienmenü zur Steuerung und/oder Regelung einer Fahrzeug-Außenbeleuchtung, ein Bedienmenü zur Überprüfung der Fahrzeugbeleuchtung und ein Bedienmenü zur Verriegelung und Entriegelung des Lastkraftwagens 1 angezeigt. Sofern sich das mobile Gerät 3 gemäß Fig. 5 innerhalb des Lastkraftwagens 1 befindet wird mittels des Bildschirms 5 des mobilen Geräts 3 ein Bedienmenü zur Steuerung und/oder Regelung eines Infotainment-Systems des Fahrzeugs, ein Bedienmenü zur Steuerung und/oder Regelung einer Fahrzeugheizung und einer Fahrzeugklimaanlage, ein Bedienmenü zur Steuerung und/oder Regelung einer Fahrzeug-Innenbeleuchtung und ein Bedienmenü zur Verriegelung und Entriegelung des Lastkraftwagens 1 angezeigt.

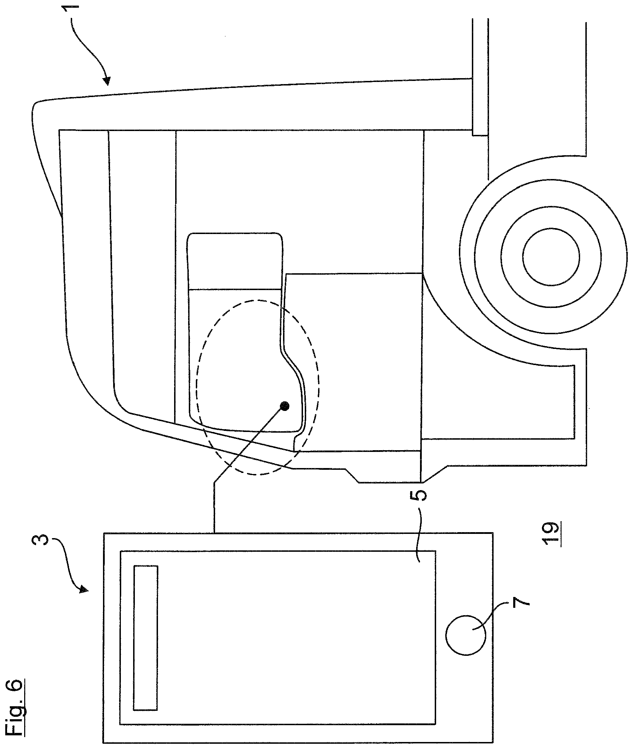

Des Weiteren wird, sofern sich das mobile Gerät 3 gemäß Fig. 6 in einer Sitzposition in einem definierten Nahbereich im Bereich des Fahrersitzes befindet, hier beispielhaft auch die Bedienung aller Bedienmenüs zur Fernbedienung von Fahrzeugfunktionen mittels einer Blockiereinrichtung 25 (Fig. 2) blockiert.

Zudem wird hier beispielhaft auch, sofern sich das mobile Gerät 3 bei einem Be- und/oder Entladevorgang des Lastkraftwagens 1 in einer definierten Position relativ zu dem Lastkraftwagen 1 befindet, wenigstens eine Be- und/oder Endlade-Fahrzeuginformation und/oder wenigstens ein Bedienmenü zur Fernbedienung einer Be- und/oder Endlade-Fahrzeugfunktion mittels des mobilen Geräts 3 angezeigt.

### Bezugszeichenliste

- 1: Lastkraftwagen
- 3: mobiles Gerät
- 5: Bildschirm
- 7: Taste
- 9: Positionsermittlungseinrichtung
- 11: Sendeeinrichtung
- 13: Empfangseinrichtung
- 15: Datenverarbeitungseinrichtung
- 17: Sende- und Empfangseinrichtung
- 19: Empfangsbereich
- 21: Außenbereich
- 23: Signalausgabeeinrichtung
- 25: Blockiereinrichtung

## Patentansprüche

1. Verfahren zur Unterstützung eines Fahrers eines Fahrzeugs, insbesondere eines Nutzfahrzeugs, wobei eine mobile Anzeigeeinrichtung (3), insbesondere ein Bildschirm, vorgesehen ist, mittels der dem Fahrer wenigstens eine Fahrzeuginformation und/oder wenigstens ein Bedienmenü zur Fernbedienung wenigstens einer Fahrzeugfunktion anzeigbar ist, wobei
die Anzeigeeinrichtung (3) signalübertragend mit einer Positionsermittlungseinrichtung (9) verbunden ist, mittels der die Position der Anzeigeeinrichtung (3) relativ zu dem Fahrzeug (1) ermittelbar ist, und wobei
in Abhängigkeit von der ermittelten Position wenigstens eine Fahrzeuginformation und/oder wenigstens ein Bedienmenü zur Fernbedienung wenigstens einer Fahrzeugfunktion mittels der Anzeigeeinrichtung (3) angezeigt wird,
**dadurch gekennzeichnet,**
**dass**, sofern sich die Anzeigeeinrichtung (3) bei einem Be- und/oder Entladevorgang des Fahrzeugs (1) in wenigstens einer definierten Position relativ zu dem Fahrzeug (1) befindet, wenigstens eine Be- und/oder Entlade-Fahrzeuginformation und/oder wenigstens ein Bedienmenü zur Fernbedienung wenigstens einer Be- und/oder Entlade-Fahrzeugfunktion mittels der Anzeigeeinrichtung (3) angezeigt wird.

2. Verfahren nach Anspruch 1, **dadurch gekennzeichnet, dass** mittels der Positionsermittlungseinrichtung (9) die Entfernung der Anzeigeeinrichtung (3) relativ zu dem Fahrzeug (1) ermittelt wird, und dass in Abhängigkeit von der ermittelten Entfernung der Anzeigeeinrichtung (3) wenigstens eine Fahrzeuginformation und/oder wenigstens ein Bedienmenü zur Fernbedienung wenigstens einer Fahrzeugfunktion mittels der Anzeigeeinrichtung (3) angezeigt wird.

3. Verfahren nach Anspruch 1 oder 2, **dadurch gekennzeichnet, dass** die Positionsermittlungseinrichtung (9) wenigstens eine dem Fahrzeug (1) zugeordnete Sendeeinrichtung (11) aufweist, mittels der ein, insbesondere als Bluetooth-Signal ausgebildetes, Positionssignal ausgebbar ist, dass die Positionsermittlungseinrichtung (9) eine der Anzeigeeinrichtung (3) zugeordnete Empfangseinrichtung (13) aufweist, mittels der das wenigstens eine Positionssignal empfangbar ist, und dass die Positionsermittlungseinrichtung (9) eine der Anzeigeeinrichtung (3) zugeordnete Datenverarbeitungseinrichtung (15) aufweist, mittels der aus dem wenigstens einen empfangenem Positionssignal die Position der Anzeigeeinrichtung (3) relativ zu dem Fahrzeug (1) ermittelt wird.

4. Verfahren nach einem der Ansprüche 1 bis 3, **dadurch gekennzeichnet, dass** die Anzei-geeinrichtung (3) wenigstens eine durch den Fahrer des Fahrzeugs betätigbare, mobile Betätigungseinrichtung (5, 7), insbesondere einen Taster und/oder einen Schalter, aufweist, durch deren Betätigung das wenigstens eine Bedienmenü bedienbar ist.

5. Verfahren nach einem der Ansprüche 1 bis 4, **dadurch gekennzeichnet, dass** die Anzeigeeinrichtung (3) durch ein mobiles Gerät, insbesondere durch ein Smartphone und/oder durch einen Tablet-PC, gebildet ist.

6. Verfahren nach einem der vorhergehenden Ansprüche, **dadurch gekennzeichnet, dass** eine Signalübertragungseinrichtung (17) vorgesehen ist, mittels der wenigstens ein, insbesondere als WLAN-Signal und/oder als Funksignal und/oder als Bluetooth-Signal, ausgebildetes, Fernbedienungssignal von der Anzeigeeinrichtung (3) an das Fahrzeug (1) und/oder wenigstens ein, insbesondere als WLAN-Signal und/oder als Funksignal und/oder als Bluetooth-Signal ausgebildetes, Fahrzeuginformationssignal von dem Fahrzeug (1) an die Anzeigeeinrichtung (3) übertragen wird.

7. Verfahren nach einem der Ansprüche 3 bis 6, **dadurch gekennzeichnet, dass**, sofern sich die Empfangseinrichtung (13) außerhalb der Reichweite des Positionssignals befindet und sie somit das Positionssignal nicht empfängt, wenigstens eine Fern-Fahrzeuginformation und/oder wenigstens ein Bedienmenü zur Fernbedienung wenigstens einer Fern-Fahrzeugfunktion mittels der Anzeigeeinrichtung (3) angezeigt wird.

8. Verfahren nach Anspruch 7, **dadurch gekennzeichnet, dass** die Fern-Fahrzeuginformation durch wenigstens eine allgemeine Fahrzeuginformation und/oder durch den aktuellen Luftdruck wenigstens eines Fahrzeugreifens und/oder durch den aktuellen Standort des Fahrzeugs (1) und/oder durch wenigstens eine Instrumententafelinformation gebildet ist, und/oder dass die wenigstens eine Fern-Fahrzeugfunktion durch eine Regelung und/oder Steuerung einer Fahrzeugheizung und/oder einer Fahrzeugklimaanlage gebildet ist.

9. Verfahren nach einem der Ansprüche 3 bis 8, **dadurch gekennzeichnet, dass**, sofern sich die Empfangseinrichtung (13) innerhalb der Reichweite des Positionssignals befindet und sie somit das Positionssignal empfängt, wenigstens eine Nah-Fahrzeuginformation und/oder wenigstens ein Bedienmenü zur Fernbedienung wenigstens einer Nah-Fahrzeugfunktion mittels der Anzeigeeinrichtung (3) angezeigt wird, wobei bevorzugt vorgesehen ist, dass die wenigstens eine Nah-Fahrzeuginformation durch wenigstens eine allgemeine Fahrzeuginformation gebildet ist.

10. Verfahren nach einem der Ansprüche 3 bis 9, **dadurch gekennzeichnet, dass** sofern sich die Empfangseinrichtung (13) von einem Außenbereich (21) außerhalb der Reichweite des Positionssignals in einen Innenbereich (19) innerhalb der Reichweite des Positionssignals bewegt, wenigstens eine Nah-Fahrzeuginformation und/oder wenigstens ein Bedienmenü zur Fernbedienung wenigstens einer Nah-Fahrzeugfunktion mittels der Anzeigeeinrichtung (3) angezeigt wird, wobei bevorzugt vorgesehen ist, dass beim Anzeigen einer definierten Nah-Fahrzeuginformation und/oder eines definierten Bedienmenüs zur Fernbedienung wenigstens einer Nah-Fahrzeugfunktion mittels einer der Anzeigeeinrichtung (3) zugeordneten Signalausgabeeinrichtung ein, insbesondere akustisches, Informationssignal an den Fahrer ausgegeben wird.

11. Verfahren nach Anspruch 9 oder 10, **dadurch gekennzeichnet, dass**, sofern sich die Empfangseinrichtung (13) außerhalb des Fahrzeugs (1) befindet, die Nah-Fahrzeugfunktion durch eine Außen-Fahrzeugfunktion gebildet ist, wobei bevorzugt vorgesehen ist, dass die wenigstens eine fernbedienbare Außen-Fahrzeugfunktion durch eine Steuerung und/oder Regelung einer Fahrzeug-Außenbeleuchtung und/oder durch eine Überprüfung der Fahrzeugbeleuchtung und/oder durch eine Verriegelung und/oder Entriegelung des Fahrzeugs (1) gebildet ist.

12. Verfahren nach einem der Ansprüche 9 bis 11, **dadurch gekennzeichnet, dass**, sofern sich die Empfangseinrichtung (13) innerhalb des Fahrzeugs (1) befindet, die Nah-Fahrzeugfunktion durch eine Innen-Fahrzeugfunktion gebildet ist, wobei bevorzugt vorgesehen ist, dass die wenigstens eine fernbedienbare Innen-Fahrzeugfunktion durch eine Steuerung und/oder Regelung eines Infotainment-Systems des Fahrzeugs (1) und/oder durch eine Steuerung und/oder Regelung einer Fahrzeugheizung und/oder einer Fahrzeugklimaanlage und/oder durch eine Steuerung und/oder Regelung einer Fahrzeug-Innenbeleuchtung und/oder durch eine Verriegelung und/oder Entriegelung des Fahrzeugs (1) gebildet ist.

13. Verfahren nach einem der vorhergehenden Ansprüche, **dadurch gekennzeichnet, dass** eine Blockiereinrichtung (25) vorgesehen ist, mittels der in Abhängigkeit von der ermittelten Position der Anzeigeeinrichtung (3) die Fernbedienung wenigstens einer Fahrzeugfunktion blockiert wird, wobei bevorzugt vorgesehen ist, dass, sofern sich die Anzeigeeinrichtung (3) in einer Sitzposition in einem definierten Nahbereich im Bereich des Fahrersitzes befindet, die Fernbedienung wenigstens einer, insbesondere die Fernbedienung von allen, Fahrzeugfunktion mittels der Blockiereinrichtung (25) blockiert wird.

14. Vorrichtung zur Unterstützung eines Fahrers eines Fahrzeugs, insbesondere eines Nutzfahrzeugs und/oder zur Durchführung eines Verfahrens nach einem der vorhergehenden Ansprüche, wobei eine mobile Anzeigeeinrichtung (3), insbesondere ein Bildschirm, vorgesehen ist, mittels der dem Fahrer wenigstens eine Fahrzeuginformation und/oder wenigstens ein Bedienmenü zur Fernbedienung wenigstens einer Fahrzeugfunktion anzeigbar ist, wobei
die Anzeigeeinrichtung (3) signalübertragend mit einer Positionsermittlungseinrichtung (9) verbunden ist, mittels der die Position der Anzeigeeinrichtung (3) relativ zu dem Fahrzeug (1) ermittelbar ist, und wobei
in Abhängigkeit von der ermittelten Position wenigstens eine Fahrzeuginformation und/oder wenigstens ein Bedienmenü zur Fernbedienung wenigstens einer Fahrzeugfunktion mittels der Anzeigeeinrichtung (3) anzeigbar ist,
**dadurch gekennzeichnet,**
**dass**, sofern sich die Anzeigeeinrichtung (3) bei einem Be- und/oder Entladevorgang des Fahrzeugs (1) in wenigstens einer definierten Position relativ zu dem Fahrzeug (1) befindet, wenigstens eine Be- und/oder Entlade-Fahrzeuginformation und/oder wenigstens ein Bedienmenü zur Fernbedienung wenigstens einer Be- und/oder Entlade-Fahrzeugfunktion mittels der Anzeigeeinrichtung (3) anzeigbar ist.

15. Fahrzeug, insbesondere Nutzfahrzeug, zur Durchführung eines Verfahrens nach einem der Ansprüche 1 bis 13.

16. Fahrzeug, insbesondere Nutzfahrzeug, mit einer Vorrichtung nach Anspruch 14.

## Claims

1. Method for assisting a driver of a vehicle, in particular a commercial vehicle, there being provision for a mobile display device (3), in particular a screen, by means of which at least one vehicle information item and/or at least one operator control menu for remotely controlling at least one vehicle function can be displayed to the driver, wherein
the display device (3) is connected for signal transmission purposes to a position determination device (9) by means of which the position of the display device (3) relative to the vehicle (1) can be determined, and wherein
the determined position is taken as a basis for displaying at least one vehicle information item and/or at least one operator control menu for remotely controlling at least one vehicle function by means of the display device (3),
**characterized**
**in that** if the display device (3) is in at least one defined position relative to the vehicle (1) during a loading and/or unloading process of the vehicle (1), at least one loading and/or unloading vehicle information item and/or at least one operator control menu for remotely controlling at least one loading and/or unloading vehicle function is displayed by means of the display device (3).

2. Method according to Claim 1, **characterized in that** the distance of the display device (3) relative to the vehicle (1) is determined by means of the position determination device (9), and **in that** the determined distance of the display device (3) is taken as a basis for displaying at least one vehicle information item and/or at least one operator control menu for remotely controlling at least one vehicle function by means of the display device (3).

3. Method according to Claim 1 or 2, **characterized in that** the position determination device (9) has at least one transmitter device (11), associated with the vehicle (1), by means of which a position signal, which is in particular in the form of a Bluetooth signal, can be output, **in that** the position determination device (9) has a receiver device (13), associated with the display device (3), by means of which the at least one position signal can be received, and **in that** the position determination device (9) has a data processing device (15), associated with the display device (3), by means of which the position of the display device (3) relative to the vehicle (1) is determined from the at least one received position signal.

4. Method according to one of Claims 1 to 3, **characterized in that** the display device (3) has at least one mobile activation device (5, 7), in particular a pushbutton key and/or a switch, which can be activated by the driver of the vehicle and by whose activation the at least one operator control menu can be controlled.

5. Method according to one of Claims 1 to 4, **characterized in that** the display device (3) is formed by a mobile apparatus, in particular by a smartphone and/or by a tablet PC.

6. Method according to one of the preceding claims, **characterized in that** there is provision for a signal transmission device (17) by means of which at least one remote control signal, which is in particular in the form of a WLAN signal and/or in the form of a radio signal and/or in the form of a Bluetooth signal, is transmitted from the display device (3) to the vehicle (1) and/or at least one vehicle information signal, which is in particular in the form of a WLAN signal and/or in the form of a radio signal and/or in the form of a Bluetooth signal, is transmitted from the vehicle (1) to the display device (3).

7. Method according to one of Claims 3 to 6, **characterized in that** if the receiver device (13) is outside the range of the position signal and it therefore does not receive the position signal, at least one long-range vehicle information item and/or at least one operator control menu for remotely controlling at least one long-range vehicle function is displayed by means of the display device (3).

8. Method according to Claim 7, **characterized in that** the long-range vehicle information item is formed by at least one general vehicle information item and/or by the current air pressure of at least one vehicle tyre and/or by the current location of the vehicle (1) and/or by at least one instrument panel information item, and/or **in that** the at last one long-range vehicle function is formed by closed-loop and/or open-loop control of a vehicle heating system and/or of a vehicle air conditioning system.

9. Method according to one of Claims 3 to 8, **characterized in that** if the receiver device (13) is within the range of the position signal and it therefore receives the position signal, at least one close-range vehicle information item and/or at least one operator control menu for remotely controlling at least one close-range vehicle function is displayed by means of the display device (3), there preferably being provision for the at least one close-range vehicle information item to be formed by at least one general vehicle information item.

10. Method according to one of Claims 3 to 9, **characterized in that** if the receiver device (13) moves from an outer region (21) outside the range of the position signal to an inner region (19) within the range of the position signal, at least one close-range vehicle information item and/or at least one operator control menu for remotely controlling at least one close-range vehicle function is displayed by means of the display device (3), there preferably being provision for display of a defined close-range vehicle information item and/or a defined operator control menu for remotely controlling at least one close-range vehicle function to result in an, in particular audible, information signal being output to the driver by means of a signal output device associated with the display device (3).

11. Method according to Claim 9 or 10, **characterized in that** if the receiver device (13) is outside the vehicle (1), the close-range vehicle function is formed by an external vehicle function, there preferably being provision for the at least one remote-controlled external vehicle function to be formed by open-loop and/or closed-loop control of a vehicle exterior lighting system and/or by inspection of the vehicle lighting system and/or by locking and/or unlocking of the vehicle (1).

12. Method according to one of Claims 9 to 11, **characterized in that** if the receiver device (13) is inside the vehicle (1), the close-range vehicle function is formed by an interior vehicle function, there preferably being provision for the at least one remote-controlled interior vehicle function to be formed by open-loop and/or closed-loop control of an infotainment system of the vehicle (1) and/or by open-loop and/or closed-loop control of a vehicle heating system and/or of a vehicle air conditioning system and/or by open-loop and/or closed-loop control of a vehicle interior lighting system and/or by locking and/or unlocking of the vehicle (1).

13. Method according to one of the preceding claims, **characterized in that** there is provision for a blocking device (25) by means of which the determined position of the display device (3) is taken as a basis for blocking the remote control of at least one vehicle function, there preferably being provision for the remote control of at least one vehicle function, in particular the remote control of all the vehicle functions, to be blocked by means of the blocking device (25) if the display device (3) is in a sitting position in a defined area close to the driver's seat.

14. Device for assisting a driver of a vehicle, in particular a commercial vehicle, and/or for carrying out a method according to one of the preceding claims, there being provision for a mobile display device (3), in particular a screen, by means of which a vehicle information item and/or at least one operator control menu for remotely controlling at least one vehicle function can be displayed to the driver, wherein
the display device (3) is connected for signal transmission purposes to a position determination device (9) by means of which the position of the display device (3) relative to the vehicle (1) can be determined, and wherein
the determined position can be taken as a basis for displaying at least one vehicle information item and/or at least one operator control menu for remotely controlling at least one vehicle function by means of the display device (3),
**characterized**
**in that** if the display device (3) is in at least one defined position relative to the vehicle (1) during a loading and/or unloading process of the vehicle (1), at least one loading and/or unloading vehicle information item and/or at least one operator control menu for remotely controlling at least one loading and/or unloading vehicle function can be displayed by means of the display device (3).

15. Vehicle, in particular commercial vehicle, for carrying out a method according to one of Claims 1 to 13.

16. Vehicle, in particular commercial vehicle, having a device according to Claim 14.

## Revendications

1. Procédé d'aide d'un conducteur d'un véhicule, notamment d'un véhicule utilitaire, un module d'affichage mobile (3), en particulier un écran, étant prévu qui permet d'afficher au conducteur au moins une information de véhicule et/ou au moins un menu de commande destiné à commander à distance au moins une fonction de véhicule,
le module d'affichage (3) étant en transmission de signal à un module de détermination de position (9) qui permet de déterminer la position du module d'affichage (3) par rapport au véhicule (1), et
au moins une information de véhicule et/ou au moins un menu de commande destiné à commander à distance au moins une fonction de véhicule étant affiché au moyen du module d'affichage (3) en fonction de la position déterminée,
**caractérisé en ce que**
si le module d'affichage (3) se trouve dans au moins une position définie par rapport au véhicule (1) pendant un processus de chargement et/ou de déchargement du véhicule (1), au moins une information de chargement et/ou de déchargement du véhicule et/ou au moins un menu de commande destiné à commander à distance au moins une fonction de chargement et/ou de déchargement du véhicule est affiché au moyen du module d'affichage (3).

2. Procédé selon la revendication 1, **caractérisé en ce que** la distance du module d'affichage (3) au véhicule (1) est déterminée au moyen du module de détermination de position (9), et **en ce qu'**au moins une information de véhicule et/ou au moins un menu de commande destiné à commander à distance au moins une fonction de véhicule est affiché au moyen du module d'affichage (3) en fonction de la distance déterminée du module d'affichage (3).

3. Procédé selon la revendication 1 ou 2, **caractérisé en ce que** le module de détermination de position (9) comporte au moins un module d'émission (11) qui est associé au véhicule (1) et qui permet de délivrer un signal de position, notamment conçu comme un signal Bluetooth, **en ce que** le module de détermination de position (9) comporte un module de réception (13) qui est associé au module d'affichage (3) et qui permet de recevoir l'au moins un signal de position, et **en ce que** le module de détermination de position (9) comporte un module de traitement de données (15) qui est associé au module d'affichage (3) et qui permet de déterminer la position du module d'affichage (3) par rapport au véhicule (1) à partir de l'au moins un signal de position reçu.

4. Procédé selon l'une des revendications 1 à 3, **caractérisé en ce que** le module d'affichage (3) comporte au moins un module d'actionnement mobile (5, 7), notamment un bouton et/ou un commutateur, qui peut être actionné par le conducteur du véhicule et dont l'actionnement permet de commander l'au moins un menu de commande.

5. Procédé selon l'une des revendications 1 à 4, **caractérisé en ce que** le module d'affichage (3) est formé par un appareil mobile, notamment par un Smartphone et/ou par une tablette PC.

6. Procédé selon l'une des revendications précédentes, **caractérisé en ce qu'**un module de transmission de signal (17) est prévu qui permet de transmettre au moins un signal de commande à distance, notamment sous forme d'un signal WLAN et/ou d'un signal radio et/ou ou d'un signal Bluetooth, du module d'affichage (3) au véhicule (1) et/ou au moins un signal d'information de véhicule, en particulier sous forme d'un signal WLAN et/ou d'un signal radio et/ou d'un signal Bluetooth, du véhicule (1) au module d'affichage (3).

7. Procédé selon l'une des revendications 3 à 6, **caractérisé en ce que**, si le module de réception (13) est hors de portée du signal de position et ne reçoit donc pas le signal de position, au moins une information de véhicule distant et/ou au moins un menu de commande destiné à commander à distance au moins une fonction de véhicule distant est affiché au moyen du module d'affichage (3).

8. Procédé selon la revendication 7, **caractérisé en ce que** l'information de véhicule distant est formée par au moins une information de véhicule générale et/ou par la pression d'air actuelle d'au moins un pneumatique de véhicule et/ou par la localisation actuelle du véhicule (1) et/ou par au moins une information de tableau de bord, et/ou **en ce que** l'au moins une fonction de véhicule distant est formée par une régulation et/ou une commande d'un chauffage de véhicule et/ou d'un système de climatisation de véhicule.

9. Procédé selon l'une des revendications 3 à 8, **caractérisé en ce que**, si le module de réception (13) est à portée du signal de position et reçoit ainsi le signal de position, au moins une information de véhicule proche et/ou au moins un menu de commande destiné à commander à distance au moins une fonction de véhicule proche est affiché au moyen du module d'affichage (3), l'au moins une information de véhicule proche étant de préférence prévue pour être formée par au moins une information de véhicule générale.

10. Procédé selon l'une des revendications 3 à 9, **caractérisé en ce que**, si le module de réception (13) se déplace d'une zone extérieure (21) hors de portée du signal de position vers une zone intérieure (19) à portée du signal de position, au moins une information de véhicule proche et/ou au moins un menu de commande destiné à commander à distance au moins une fonction de véhicule proche sont affichés au moyen du module d'affichage (3), un signal d'information, notamment acoustique, étant de préférence prévu pour être délivré au conducteur au moyen d'un module de délivrance de signal, associé au module d'affichage (3), lors de l'affichage d'une information de véhicule proche et/ou d'un menu de commande défini destiné à commander à distance au moins une fonction de véhicule proche.

11. Procédé selon la revendication 9 ou 10, **caractérisé en ce que**, si le module de réception (13) se trouve à l'extérieur du véhicule (1), la fonction de véhicule proche est formée par une fonction de véhicule extérieure, l'au moins une fonction de véhicule extérieure commandée à distance étant de préférence prévue pour être formée par une commande et/ou une régulation de l'éclairage de véhicule extérieur et/ou par une vérification de l'éclairage de véhicule et/ou par un verrouillage et/ou déverrouillage du véhicule (1).

12. Procédé selon l'une des revendications 9 à 11, **caractérisé en ce que**, si le module de réception (13) se trouve à l'intérieur du véhicule (1), la fonction de véhicule proche est formée par une fonction de véhicule intérieure, l'au moins une fonction de véhicule intérieure commandable à distance étant de préférence prévue pour être formée par une commande et/ou une régulation d'un système d'info-divertissement du véhicule (1) et/ou par une commande et/ou une régulation d'un chauffage de véhicule et/ou d'un système de climatisation de véhicule et/ou par une commande et/ou une régulation d'un éclairage de véhicule intérieur et/ou par un verrouillage et/ou déverrouillage du véhicule (1).

13. Procédé selon l'une des revendications précédentes, **caractérisé en ce qu'**un module de blocage (25) est prévu qui permet de bloquer la commande à distance d'au moins une fonction de véhicule en fonction de la position déterminée du module d'affichage (3), la commande à distance d'au moins une fonction de véhicule, en particulier de toutes les fonctions de véhicule, étant de préférence prévue pour être bloquée au moyen du module de blocage (25) si le module d'affichage (3) se trouve dans une position de siège dans une zone proche définie dans la zone du siège de conducteur.

14. Dispositif d'aide d'un conducteur d'un véhicule, notamment d'un véhicule utilitaire et/ou de mise en oeuvre d'un procédé selon l'une des revendications précédentes, un module d'affichage mobile (3), en particulier un écran, étant prévu qui permet d'afficher au conducteur au moins une information de véhicule et/ou au moins un menu de commande destiné à commander à distance au moins une fonction de véhicule,
le module d'affichage (3) étant relié en transmission de signal à un module de détermination de position (9) qui permet de déterminer la position du module d'affichage (3) par rapport au véhicule (1), et
au moins une information de véhicule et/ou au moins un menu de commande destiné à commander à distance au moins une fonction de véhicule pouvant être affiché au moyen du module d'affichage (3) en fonction de la position déterminée,
**caractérisé en ce que**
si le module d'affichage (3) se trouve dans au moins une position définie par rapport au véhicule (1) pendant un processus de chargement et/ou de déchargement du véhicule (1), au moins une information de chargement et/ou de déchargement du véhicule et/ou au moins un menu de commande destiné à commander à distance au moins une fonction de chargement et/ou de déchargement du véhicule peut être affiché au moyen du module d'affichage (3)

15. Véhicule, notamment véhicule utilitaire, destiné à mettre en oeuvre un procédé selon l'une des revendications 1 à 13.

16. Véhicule, notamment véhicule utilitaire, comprenant un dispositif selon la revendication 14.
